# EUROPEAN PATENT APPLICATION

(11) **EP 4 835 852 A1**
(43) Date of publication of application: **04.11.2026**
(21) Application number: 25173824.1
(22) Date of filing: 30.04.2025
(51) Int. Cl.: G07F 7/06

(54) **A CONTAINER RETURN SYSTEM AND METHOD**

(71) Applicant: Tomra Systems ASA, 1385 Asker (NO)
(72) Inventor: ADEMA, Kimberly Elisa, 7321BB Apeldoorn (NL); BUITENHUIS, Gerrit Jacob, 6961VS Eerbeek (NL)
(74) Representative: AWA Sweden AB

(57) **Abstract**

The disclosure relates to an RVM (1) having a user inlet (10), a verification arrangement (20), a storage (30) and a container arrangement (40) having a collapsible container guide (41) comprising a set of slides (60) arranged in series, each slide having a slide inlet (62) and a slide outlet (63) and a sliding surface (61) for guiding said used container along a transportation direction (65) to said slide outlet (63), wherein said set of slides (61) comprises pairs of slides (66) wherein one of said slides in each pair of slides is arranged directly upstream of the other slide in said pair of slides and the transportation direction (65) of the upstream arranged slide is partially reverse to the transportation direction (65) of the other slide in said pair of slides at least when said each slide in said pair of slides is in the expanded state. The RVM further comprises a container guide operating arrangement (50) with a raising mechanism (51) configured to collapse the collapsible container guide (41) by moving a plurality of the sliding surface (64) upwards towards the top of the guide optionally starting with the bottom sliding surface (64), and a lowering mechanism (52) configured expand the collapsible container guide from a collapsed state into the first receiving state by moving at least one of the sliding surfaces (64) downwards into its expanded state.

## Description

### Technical field of the invention

The present inventive concept relates to a container return system or an RVM (Reverse Vending Machine) for receiving used containers for recycling or reuse and optionally pay a reward in return, as well as a method of operating such a container return system or RVM. More specifically, the inventive concept is directed to the field of container return systems or RVMs arranged to transport and store glass bottles without breaking the same.

### Background and Summary of the Invention

Container return systems and RVMs for receiving, identifying and/or sorting objects, such as used beverage or food containers made of fragile material such as glass, may be used in e.g. super markets and recycle points. Many times, these devices receive the containers one by one, single feed machines, and others receive the containers in bulk and often allow the user to leave the machine while the containers are processed, bulk feed machines.

Example of a device adapted for receiving objects, such as fragile used beverage containers, and storing the same is e.g. disclosed in DE 2020 09 002 253 U1. However, such storage devices are expensive and bulky, and therefor needs to be emptied manually by picking the beverage containers many times one by one before the containers may leave the site for recycling or reuse.

There is a need for a more automated collection process, eliminating or significantly reducing the need for a manual pick of the fragile containers.

In view of the above, it is an object of the present inventive concept to provide a method and a device wherein the above-mentioned disadvantages of the prior art are addressed.

The inventive concept is defined by the appended independent claims, with embodiments being set forth in the appended dependent claims, in the following description and in the drawings.

According to a first aspect of the inventive concept, there is provided an RVM configured to receive used containers made of fragile material such as glass from a user, comprising:
- a user inlet for receiving used containers made of a fragile material such as glass from a user,
- a verification arrangement for authenticating the received containers,
- a storage comprising a storage surface for storing the authenticated containers,
- a container arrangement comprising:
   - a collapsible container guide for guiding the used containers to said storage, which collapsible container guide comprises a guide inlet and a guide outlet,
   - a container guide operating arrangement configured to transform said collapsible container guide between a set of states comprising a first receiving state and a set of collapsed states, wherein each state in said set of states are different from each other,
   wherein said guide outlet is arranged inside said storage and at or in the vicinity of the storage surface at least when said collapsible container guide is in the first receiving state ,
- a transportation arrangement configured to transport said containers received via said user inlet to said collapsible guide inlet, at least when said collapsible container guide is in said first receiving position,
wherein said collapsible container guide further comprises:
- a set of slides arranged in series, each slide having a slide inlet and a slide outlet and a sliding surface configured in size and shape to receive said used container via said slide inlet and guide said used container along a transportation direction to said slide outlet at least when said slide is unblocked and in an expanded state,

wherein said set of slides comprises pairs of slides wherein one of said slides in each pair of slides is arranged directly upstream of the other slide in said pair of slides and the transportation direction of the upstream arranged slide is partially reverse to the transportation direction of the other slide in said pair of slides at least when said each slide in said pair of slides is in the expanded state,
wherein said container guide operating arrangement comprises:
   - a raising mechanism configured to collapse the collapsible container guide by moving a plurality of the sliding surfaces upwards in the vertical direction and/or towards the top of the collapsible container guide optionally starting with the bottom sliding surface,
   - a lowering mechanism configured expand the collapsible container guide from any of the collapsed states into the first receiving state by moving at least one of said sliding surfaces downwards into their respective expanded state.

According to a second aspect of the inventive concept, there is provided a container return system configured to receive used containers made of fragile material such as glass from a user, comprising:
- a user inlet for receiving used containers made of a fragile material such as glass from a user,
- a storage comprising a storage surface for storing used containers received through said inlet,
- a container arrangement comprising:
   - a collapsible container guide for guiding received containers to said storage, which collapsible container guide comprises a guide inlet and a guide outlet,
   - a container guide operating arrangement configured to transform said collapsible container guide between a set of states comprising a first receiving state and a set of collapsed states, wherein each state in said set of states are different from each other,
   wherein said guide outlet is arranged inside said storage and at or in the vicinity of the storage surface at least when said collapsible container guide is in the first receiving state ,
- a transportation arrangement configured to transport said containers received via said user inlet to said collapsible guide inlet, when said collapsible container guide is for example in said first receiving position,
wherein said collapsible container guide further comprises:
- a set of slides arranged in series, each slide having a slide inlet and a slide outlet and a sliding surface configured in size and shape to receive said used container via said slide inlet and guide said used container along a transportation direction to said slide outlet at least when said slide is unblocked and in an expanded state,
   wherein said set of slides comprises pairs of slides wherein one of said slides in each pair of slides is arranged directly upstream of the other slide in said pair of slides and the transportation direction of the upstream arranged slide is partially reverse to the transportation direction of the other slide in said pair of slides at least when said each slide in said pair of slides is in the expanded state,
   wherein said container guide operating arrangement comprises:
      - a raising mechanism configured to collapse the collapsible container guide by moving a plurality of the sliding surfaces upwards in the vertical direction and/or towards the top of the collapsible container guide optionally starting with the bottom sliding surface,
      - a lowering mechanism configured expand the collapsible container guide from any of the collapsed states into the first receiving state by moving at least one of said sliding surfaces downwards into their respective expanded state.

According to a third aspect of the inventive concept, there is provided a method of operating an RVM or a container return systems, comprising
- providing, by said container guide operating arrangement, said collapsible container guide in the first receiving state,
- receiving, by said transportation arrangement, a first plurality of valid used containers via said user inlet,
- optionally verifying, by an optional verification arrangement, said first plurality of valid used containers and optionally classifying each container of said first plurality of used valid containers as valid or potentially valid,
- transporting by said transportation arrangement said first plurality of valid used containers sequentially towards and into said collapsible guide inlet, whereafter the containers in said first plurality of valid used container is transported
sequentially passed a predetermined pair of slides under the act of gravity while said collapsible container guide is in the first receiving state,
- transforming, by said raising mechanism, the collapsible container guide into one of said collapsed states,
wherein each container in said set of plurality of valid containers exits through said guide outlet during the time interval while said collapsible container guide is in the first receiving position or is raised towards said one of said collapsible states,
- transforming, by said lowering mechanism, said collapsible container guide into a receiving state of said collapsed states, wherein said guide outlet is arranged inside said storage and at or in the vicinity of the surface formed by at least said first plurality of used valid containers,
- receiving, by said transportation arrangement, a further plurality of valid used containers via said user inlet,
- verifying, by a verification arrangement, said further plurality of valid used containers and classifying each container of said further plurality of used valid containers as valid or potentially valid,
- transporting by said transportation arrangement said further plurality of valid used containers sequentially towards and into said collapsible guide inlet, whereafter the containers in said further plurality of valid used containers is transported sequentially passed a predetermined pair of slides under the act of gravity while said collapsible container guide is in the receiving state of said collapsed states,
- transforming, by said raising mechanism, the collapsible container guide into a higher one of said collapsed states,
wherein each container in said set of further valid containers exits through said guide outlet during the time interval while said collapsible container guide is in the receiving state of said collapsed states or is raised towards said higher one of said collapsible states.

In some embodiments of the inventive concepts, the receiving, by said transportation arrangement, a first plurality of valid used containers via said user inlet comprises receiving a first set of containers comprising said first plurality of used containers which are to be accepted and additional used containers which additional containers are invalid.

An object which is not a used container is referred to as a foreign object.

In some embodiments of the inventive concepts, said RVM is configured to receive a predetermined number of containers, or a predetermined number of containers of a respective size or of a predetermined set of sizes before the collapsible container arrangement is raised.

In some embodiments of the inventive concepts, said container arrangement further comprises a frame for holding or supporting said collapsible container guide.

Effects and features of the second and third aspects are largely analogous to those described above in connection with the first aspect. Embodiments mentioned in relation to one aspect are largely compatible with the other aspects. Hence, all advantages detailed in disclosure pertaining to one of the aspects or any embodiments thereof applies to the other aspects or any embodiments thereof. It is further noted that the inventive concepts relate to all possible combinations of features unless explicitly stated otherwise.

Transporting fragile containers in a chute so that the containers are align properly and reaches the bottom of the storage or the storage floor without breaking is not an easy task. The inventors have realised that a solution according to the inventive concept is advantageous as it allows the containers to travel through the collapsable container guide and into the storage without breaking and without getting permanently stuck.

One advantage of the above described inventive concepts is that the same removable storage, storage bin or storage container may be used throughout the storage or recycling chain, first inserted into or connected to the RVM, thereafter removed and shipped to a totally different location where the containers e.g. are washed before being refilled.

Other advantages of the above described inventive concepts is that it may provide a silent (due e.g. to the collapsible and thereby many times rather soft material of the chute), space efficient (due e.g. to the collapsible design of the guide), reliable and secure (due e.g. to the collapsible and thereby many times rather soft material of the chute) and/or time efficient (due e.g. to the rather short travel path from the inlet to the storage) guide or chute for transporting used fragile containers into a removable storage.

In relation to these inventive concepts, the term "expanded state" of the collapsable container guide refers to when the collapsable container guide together with the optional frame is fully unfolded, at least as far as its configuration and the optional frame allows, and is hanging freely so that it is not restricted by e.g. resting on a storage floor. In the Expanded state the collapsable container guide is preferably not restricted by neither the raising mechanism nor the lowering mechanism. The Expanded state might not be available inside the storage due to the storage floor.

In relation to these inventive concepts, when the slide comprises both a sliding surface and slide walls, the slide may be referred to as a "slide pocket" and the terms "slide" and "slide pocket" may be used interchangeably. A first and a second sliding surface is preferably attached to a respective lateral side of the sliding surface and/or an optional frame as this facilitates the raising of the slide surface. Attaching the slide surface to the slide wall is also advantageous as it dampens the bouncing of the containers when they land onto the sliding surface. The slide wall are advantageous in that they prevent the containers from jumping out of the collapsible container guide.

In relation to these inventive concepts, the term "a set of collapsed states" of the collapsable container guide refers to set of states wherein at least one of the slides or the sliding surfaces has been raised upwards compared to the "expanded state". A "fully collapsed state" refers to the state used to e.g. empty the collapsable container guide after a container transportation session, wherein the slide surface of the bottom most slide reaches its highest position. In this state the collapsable container guide preferably allows containers to enter into the collapsable container guide and out of the same, while passing only e.g. one, two, three, four or a plurality of the upper most slides.

In relation to these inventive concepts, the term "a first receiving state" of the collapsable container guide is preferably a predetermined state adapted to at least one predetermined storage, and corresponds to the least collapsed state of the collapsible container wherein the collapsible container guide is ready to receive and transport containers into that predetermined storage, the first receiving state is many times used for transport of containers into the storage when it is empty. In other words, the same collapsable container guide may be used in RVM's of different heights or arranged at different heights above the storage surface; that the distance between the top of the collapsable container guide and the storage surface is different may imply that different collapsable states of the collapsable container guide is preferred for different RVM's when the storage is free of prior containers, hence the "first receiving state" may be different for these RVMs, while the "expanded state" of this collapsable container guide may be the same for all of the RVMs. The first receiving state is preferably a state wherein the collapsible container guide is ready to receive and transport containers at a time when the storage is empty and/or preferably the predetermined state within a predetermined storage wherein the bottom sliding surface of the collapsible container guide is arranged closest to the storage surface of that predetermined surface.

In relation to these inventive concepts, the term "Expanded state" of a slide refers to a state of the slide where it is fully unfolded, at least as far as its configuration and the optional frame allows, so containers may slide downwards along the sliding surface preferably by act of gravity. Over time and on average for a large number of containers, the containers slide in the transportation direction of the slides and preferably sideways.

In relation to these inventive concepts, the term "Collapsed state" of a slide refers to a state wherein the sliding surface is raised into a state where containers can not enter and/or leave the slide.

In relation to these inventive concepts, the term "Blocked state" of a slide refers to a state wherein a prior container or a foreign object blocks the outlet and prevents the current container from leaving the slide.

In relation to these inventive concepts, the expression the slide/sub frame X1 "directly upstream" of the slide/sub frame X2, refers to that there are no other slides/sub frames between X1 and X2, at least not of the same type.

In relation to these inventive concepts, the term "Partially reverse" direction refers to a direction which may be fully reverse in horizontal direction but only partially reverse in the vertical direction.

In relation to these inventive concepts, the term "Inlet" of a slide is defined as an opening or surface which may extend from the bottom of an upstream sliding surface to the top of downstream sliding surface. If there is no upstream sliding surface, the inlet of that slide may coincide with the opening allowing containers into or onto the slide.

In relation to these inventive concepts, the term "Outlet" is defined as an opening or surface which may extend vertically from where sliding surface ends and upwards.

In relation to these inventive concepts, the term "bottom sliding surface" refers to the sliding surface which is arranged most down stream when the guide is in the expanded state.

In relation to these inventive concepts, the term "One of the lowest sliding surfaces" refers to any sliding surface in the bottom half of the container guide when the guide is arranged in the expanded condition.

In relation to these inventive concepts, the term "used container" should be interpreted as empty container, e.g. after (most of) the contents of the container has been drunk, eaten, disposed of or otherwise used. Sometimes the used container is completely empty when fed into the container return system, sometimes it is not but contains some liquid and/or amount of the previous content. Many times the container content has been e.g. poured out and only some residues remain which was not easily poured out at the time.

A container return system as described herein may also be used to receive other types of recyclable or reusable containers. As non-limiting examples, a container return system according to the present inventive concept may be configured to receive used containers for cosmetics such as shampoo bottles and/or, paint, and/or chemicals, and/or any other type of consumer or professional product.

What is described in relation to one of the above aspects is also applicable to the other aspects. For example, what is described in relation to an RVM below is also applicable to the container return system. A container return system may be provided with an authentication arrangement.

In some embodiments of the inventive concept, said raising mechanism is configured to move, the sliding surface of least one of said slides upwards by providing a lifting force acting on said at least one sliding surfaces.

In some embodiments of the inventive concept, said lowering mechanism is configured to move, when at least one of said slides is in a collapsed state, the sliding surface of said at least one of said slides downwards by removing, decreasing and/or lowering a lifting force acting on said at least one sliding surfaces.

In some embodiment of the inventive concept, said container guide operating arrangement operates directly on at least one of the lowest sliding surfaces and/or operates directly on the bottom sliding surface. Additionally or alternatively, said container guide operating arrangement is configured to collapse the container guide by successively moving the sliding surfaces upwards towards the top of the container guide starting with at least one of the lower sliding surfaces or the bottom sliding surface.

Said lifting force is e.g. a pulling force and/or a pushing force acting on any part of the collapsible container guide directly or indirectly e.g. via the optional frame. The pulling and/or pushing force may act on the sliding surface directly or indirectly e.g. by acting on the slide walls being attached to the sliding surface. According to one example the pulling force and/or pushing force is acting directly on a lower or mid part of the collapsible container guide.

In general there is a sensor and/or a timer that is configured to provide a raising signal to the raising mechanism after a predetermined number of containers has been received, and/or after a predetermined amount of time has passed and/or if a pile of containers in, in front of, and/or in the vicinity of the lower most outlet of the collapsable container guide has been detected. Upon receipt of the raising signal the raising mechanism initiates a raising of the collapsible container e.g. by means of a pulling and/or pushing mechanism. The raising is e.g. performed until the collapsable container guide is in the fully collapsed state, wherein a majority of the slides are in a collapsed state. Alternatively, the raising is performed until the collapsable container guide is in one of the collapsed states, wherein at least one, two, three, four, five or a plurality of the slides are in a collapsed state. While the collapsable container guide is raised, any container within the collapsable container guide is released through a slide outlet. Once the intended or predetermined state is reached it is held in this position by the raising mechanism, and the raising mechanism may e.g. comprise a locking mechanism configured to keep the collapsible container guide in the intended or predetermined collapsed state.

In some embodiments of the inventive concepts, the RVM further comprises or is in communication with a processing arrangement configured to receive sensor information and/or sensor data from said sensor arrangement related to any detected containers and/or free space. The processing arrangement may further be configured to provide control signals to said container guide operating arrangement, in response to which said container guide operating arrangement activates or deactivates e.g. one of said raising mechanism, said lowering mechanism and said releasing mechanism. The control signals provided to said guide operating arrangement may be based on said sensor information and/or sensor data, but the control signals from said processing device to said container guide operating arrangement to activate or deactivate the lifting mechanism or the lowering mechanism may also be based on other parameters and sensors, such as elapsed time, as discussed herein.

After the collapsable container guide has been raised to the fully collapsed states or one of the collapsed states at least one of the slides sooner or later needs to be expanded, e.g. to be prepared to receive more containers at least after the storage has been emptied. This at least one collapsed slide is expanded by a lowering mechanism that moves the sliding surface of the at least one collapsed slide downwards e.g. by means of gravity while the locking mechanism is fully or partly released.

According to one example the raising mechanism is a roll-up mechanism, that rolls up a string such as a chain or a band shaped element attached to the collapsable container guide, which roll-up mechanism secures the rolled up chain or band shaped element in the rolled up position. The lowering mechanism is e.g. a mechanism that slowly unwinds the rolled up chain or band shaped element. Alternatively, the string is pulled by other means than winding.

According to one example the raising mechanism is a mechanism that acts on e.g. the bottom part of the collapsible container guide by means of pushing.

In some embodiments, said used containers are transported from said slide inlet to, and optionally through, said slide outlet by means of gravity.

In some embodiments, the path formed by the containers while being transported in said set of slides substantially describes ZIGZAG and/or serpentine pattern in two or three dimensions.

In some embodiments, the collapsible container guide is configured to transport the container sideways or in a direction substantially transvers to the longest axis of the used container. Additionally or alternatively, the used container is substantially cylindrical or bottle shaped and transported in a sideways direction e.g. the container is preferably rolling on its side. The bottom of the container, the surface it is configured to be standing on, may e.g. be circular, elliptical, square, rectangular, starshaped or have any other form. The container is preferably transported with this surface facing sideways.

In some embodiments, said RVM is configured to receive a predetermined set of used containers according predetermined standard. Such a standard is many times agreed upon by two or more of the produces of the containers, the stores selling the containers, and the manufacturer of the RVMs. This standard explains which sizes, shapes and material the containers may be made of and optionally also the material and field of use (marmalade jars, wine bottles), and the RVM may be configured to receive a subset of these containers e.g. with respect to size, material and field of use/ content.

The used container may be a deposit return container. A deposit return container is a container which upon its return is eligible for a refund such as a "pfand" from the Deutsche Pfandsystem GmbH (DPG). Such a system may be used by professional operators, for example in recycling centers collecting used beverage containers from the restaurant industry. According to one example the deposit return container is a wine bottle or other type of glass container.

In some embodiments, the RVM further comprises a sensor arrangement configured to determine the free storage height inside said storage and/or to determine the presence of any objects such as containers in, in front of and/or adjacent to the bottom most slide. Additionally or alternatively, the sensor is configured to determine if there is a jam at the top of the collapsible container.

The value of the free storage height may e.g. be used to determine at which collapsed state it is suitable to lower the collapsible container guide when further containers are to be received, and may e.g. be measured by a sensor fixedly mounted inside the storage. Alternatively, this may be determined by a sensor arranged on the container arrangement, which sends a suitable height signal and/or stop lowering signal when the pile of bottles in the storage shows up at a suitable height in the field of view of the sensor.

In many embodiments, the slides of the collapsible container guide is configured to allow containers within the bottom most slides to fall out of the collapsible container guide while the guide is being raised towards a fully collapsed state. Additionally or alternatively, the lifting mechanism is configured to raise the collapsible container guide sufficiently slowly, so that any container still within the collapsible container guide may exit without breaking.

In some embodiments, the RVM further comprises a cover plate being arranged above the collapsible container guide and arranged to partially cover the opening of the collapsible container guide, and e.g. cover at least 30 % or at least 50 % of this opening, wherein the cover plate is further configured to being retractable or pivotable downwards, so at to cause a container that is prevented from entering the collapsible container guide to fall into the same. In some embodiments, the RVM is configured to retract or pivot the cover plate to free a container each time the collapsible container guide is collapsed into a predetermined collapsed state such as the fully collapsed state, irrespective of the presence of any stuck container. Additionally or alternatively, the RVM is configured to retract or pivot the cover plate is each time a container that is prevented from entering the collapsible container guide is detected by e.g. a sensor arrangement.

In some embodiments, said container arrangement further comprises a frame for holding or supporting said collapsible container guide. Additionally or alternatively, the frame may be configured in size and shape for spanning or proving or arranging at least the inlet of said collapsible container guide in an open or expanded state. Additionally or alternatively, the frame may be configured in size and shape to provide the material of said collapsible container guide or the sliding surface of said collapsible container guide in a tensioned state or in a partially tensioned state, which tensioned state is preferably provided at all times while the container arrangement is in operation or while the collapsible container guide is mounted on said frame.

In some embodiments, the frame comprises a set of rigid sub units, each rigid sub unit comprising at least three bars or elongated members preferably arranged in a U-shape. The rigid sub units in said set of rigid sub units are preferably pivotable attached to each other by pivoting means, whereby said frame preferably is collapsable or foldable into a collapsed state.

In some embodiments, the frame comprises a set of rigid sub units, each sub unit comprising at least three bars or elongated members configured to support the opening of the slide, which bars e.g. is arranged in a U-shape, wherein each sub unit has an upper portion and a lower portion, wherein the sub units in the set of rigid sub units is foldable or collapsable attached to each other in series by an upper part of a first sub unit being pivotably attached to the lower part of a second sub unit arranged directly upstream of said first subunit. By the foldable or collapsable attachment to each other, the frame may be transformed between a collapsed and an expanded state.

The collapsable container guide is preferably made of a material that is easy to wash either by hand or in a washing machine.

In some embodiments, the collapsible container guide and the set of slides is made of flexible material such as fabric and/or textile selected from a group comprising plastics, fibrous materials, synthetic materials, organic materials, polymer materials, leather, rubber, foam, woven materials and non-woven materials and combinations thereof. According to one non-limiting example the collapsible container guide is made of PVC, and e.g. PVC tarpaulin, and e.g. having 1250 to 1600 g/m2 or 1400 to 1500 g/m2. Additionally or alternatively, the material the collapsible container guide is made of has 5,000 - 9000 N/5 cm breaking strength or 6,000 - 8000 N/5cm breaking strength, or 6500 to 7 5007,000 N/5 cm breaking strength.

In some embodiments, the material of the collapsible container guide is selected such that it is sufficiently flexible to dampen the bouncing when the containers land in the slide but not stretchy as this will might reduce the container speed too much.

In some embodiments, said raising mechanism is a pulling mechanism that pulls at least one sliding surface and at least one of said rigid sub frames upwards, while collapsing said sliding surface and said frame.

In some embodiments, the lowering mechanism is a releasing mechanism that allows at least one sub frame and at least one sliding surface of a collapsed slide to move downward, while expanding said at least one sliding surface of a collapsed slide.

In some embodiments, the verification arrangement is arranged upstream of said collapsible container guide and downstream of said user inlet, and wherein said transportation arrangement transports said used containers from said user inlet to said guide inlet via said verification arrangement. The verification arrangement may e.g. be arranged and configured as described in WO 2012/177148 or as described in US 2014/0147005.

In some embodiments, said verification arrangement is configured to classify the used container into at least one category selected among the group comprising accepted, rejected and unrecognized.

Said verification arrangement may further be configured to:
- initiate a transport of used containers classified as rejected to a rejection area or back to the user, and
- initiate a transport of used containers classified accepted to the collapsible container guide.

In some embodiments, said storage is a removable container preferably placed within a housing of the RVM, wherein said removable container optionally comprises movement facilitating means. The movement facilitating means comprises e.g. wheels configured to allow the removable container to be passed over a floor. Additionally or alternatively, said movement facilitating means is configured in size and shape to be removed by moving means such as a pallet jack.

### Brief description of the drawings

The inventive concept, some non-limiting embodiments, and further advantages of the inventive concept will now be described with reference to the drawings in which:
Figures 1A and 1B show schematic perspective views of an RVM according to the present inventive concept.
Figures 2A, 2A' show a schematic perspective view of a the same container arrangement according to an embodiment of present inventive concept where the slide walls are shorter.
Figure 2B show a schematic perspective view of a container arrangement according an embodiment of the present inventive concept where the slide walls are longer.
Figures 3A to 3E schematically show the working principle of an RVM according to the present inventive concept.
Figures 4A and 4B schematically show the working principle of a jam releasing mechanism according to the present inventive concept.
Figures 5a to 5c are side views of the frame according to the present inventive concept, drawn to scale.
Figure 5d show a schematic perspective view of the frame shown in Figures 5a to 5c when a collapsible guide has been mounted thereon.
Figure 6 schematically shows the method according to at least one embodiment of the present inventive concept.

The figures are not necessarily to scale, and generally only show parts that are necessary in order to elucidate the inventive concept, wherein other parts may be omitted or merely suggested. Throughout the figures, the same reference signs designate the same, or essentially the same features.

### Detailed description

In the following detailed description, the present inventive concept is described with reference to an RVM and a method for operating the same. It should be noted that this by no means limits the scope of the inventive concept, which is also applicable in other circumstances for instance with other types or variants of container return systems than the embodiments shown in the appended drawings. Further, that specific components or items or steps are mentioned in relation to one embodiment of the inventive concept does not mean that those components or items or steps cannot be used to an advantage together with other embodiments of the inventive concept.

Features illustrated in the attached drawings or described in the following as part of one embodiment may be used with another embodiment to yield still a further embodiment. In the interest of clarity, not all features of an actual implementation are described in this specification. Various structures, systems and devices are schematically depicted in the drawings for purposes of explanation only and so as to not obscure the description with details that are well known to those skilled in the art. Nevertheless, the attached drawings are included to describe and explain illustrative examples of the disclosed subject matter.

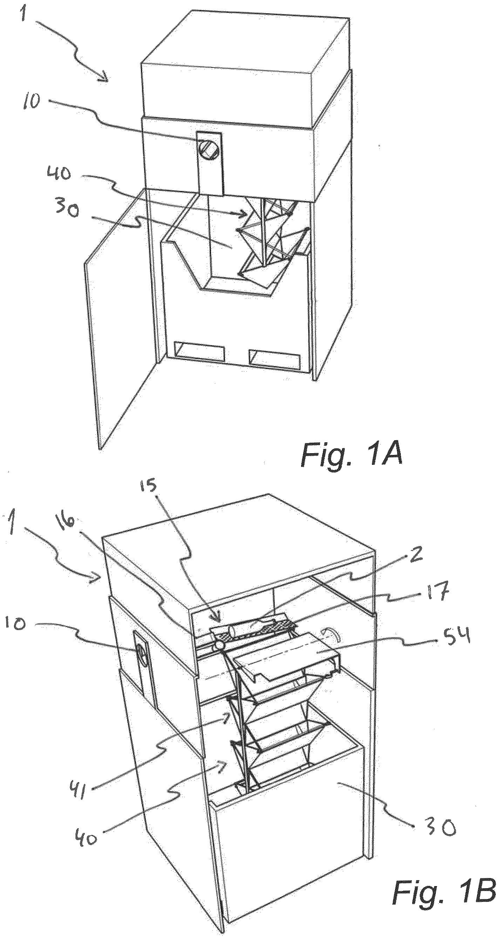

Figures 1A and 1B show schematic perspective views of an RVM 1 according to the present inventive concept. As shown in the Figures the RVM 1 comprises a user inlet 10 for receiving used containers preferably made of a fragile material such as glass from a user. The RVM comprises an verification arrangement 20 for authenticating the returned containers and classify them as at least one of invalid, potentially valid or valid. Additionally or alternatively the verification arrangement determines if the containers are to be accepted by the RVM or returned to the user. The RVM further comprises a removable storage 30 for storing the valid and/or accepted containers and optionally also the containers that has been classified as potentially valid. Periodically the removable storage is pulled out by means of a fork lift, so that the containers may be picked up and driven to a recirculation or refilling station. As shown at least in Figure 1B a transportation arrangement 15, e.g. movable belt conveyor 16 and a static slide 17, and a container arrangement 40 comprising a collapsible container guide 41 is arranged inside the RVM. The movable belt conveyor and the static slide are configured to cause the container 2 to move into the collapsible container guide 41 of the container arrangement.

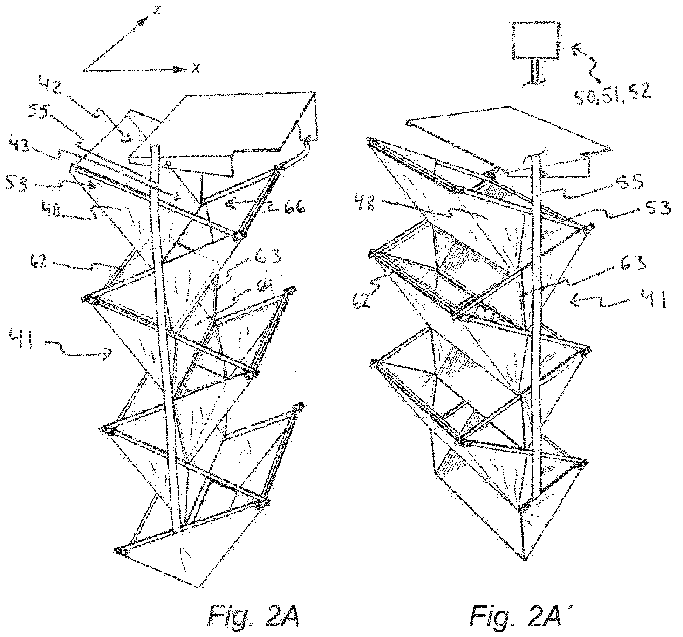

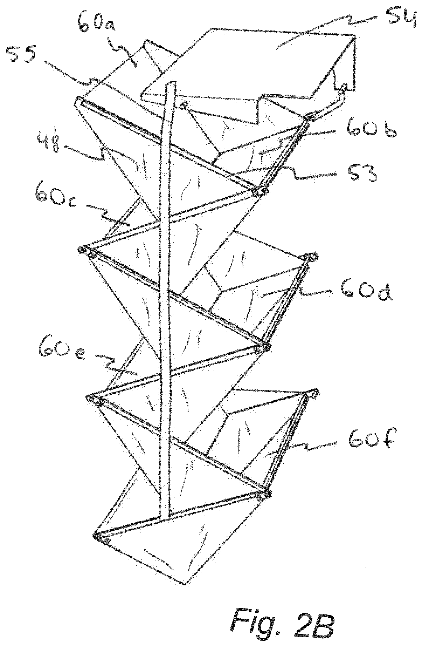

Figures 2A and 2B show a schematic perspective view of a respective container arrangement according to two different embodiments of the invention. The two container arrangements are identical, except that the walls 48 of the slide extends further along the frame or container guide frame 53 in the embodiment shown in Figure 2B as compared to in the embodiment shown in Figures 2A and 2A'. In the embodiment shown in Figure 2B the walls extends essentially along the full length of the frame, while the walls extends substantially from one end to the mid of the frame in the embodiment shown in Figure 2A. Each collapsable container comprises a set of slides 60, here six slides 60a-60f are shown, arranged in series, each slide having a slide inlet 62 and a slide outlet 63 and a sliding surface 64 configured in size and shape to receive the used container 2 via the slide inlet and guide the container along a transportation direction to the slide outlet. The set of slides 60 comprises pairs of slides, wherein one of said slides in each pair of slides is arranged directly upstream of the other slide in said pair of slides and the transportation direction of the upstream arranged slide is partially reverse to the transportation direction of the other slide in said pair of slides at least when said each slide in said pair of slides is in the expanded state. Consequently, the slides with the reference numerals 60a and 60b forms one pair of slides and the slides with the reference numerals 60b and 60c forms another pair of slides.

The container arrangement further comprises a container guide operating arrangement 50 having a raising mechanism 51, such as a roll-up or pulling device, configured to collapse the collapsible container guide by moving a plurality of the sliding surfaces upwards towards the top of the collapsible container guide. The container arrangement also comprises a lowering mechanism 52, such as a releasing mechanism implemented e.g. in the roll-up device or pulling device, configured to expand the collapsible container guide into a first receiving state by moving one, two, three or a plurality of the sliding surfaces downwards into their respective expanded state. In the embodiment shown in Figure 2A, 2A'and 3B the raising mechanism and the lowering mechanism further comprises a string 55, which is attached to one or both of the collapsible container and the frame, e.g. to the top of the bottom slide and/or to the lower most rigid sub unit of the frame.

The lowering mechanism 50, 52, 55 may be configured to move, when at least one of said slides is in a collapsed state, the sliding surface of said at least one of said slides being in the collapsed state downwards by removing, decreasing and/or lowering a lifting force acting on said at least one sliding surfaces. In the illustrated example it is the string 55 that acts directly on the collapsible container guide.

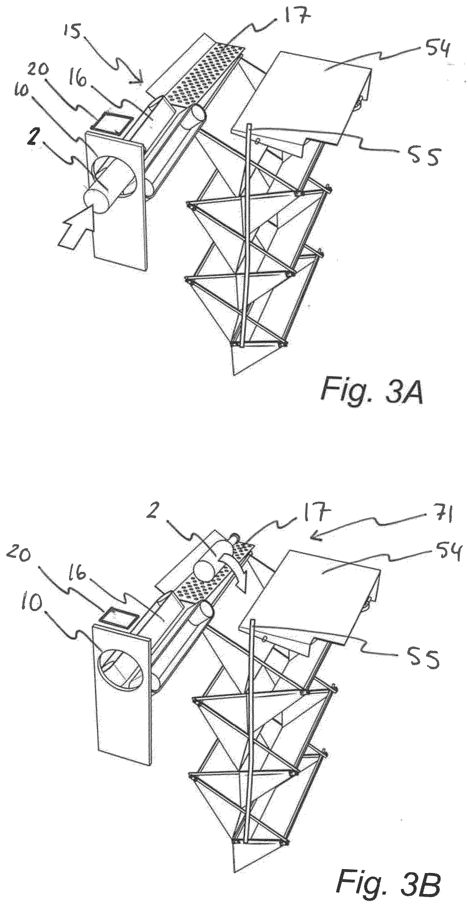

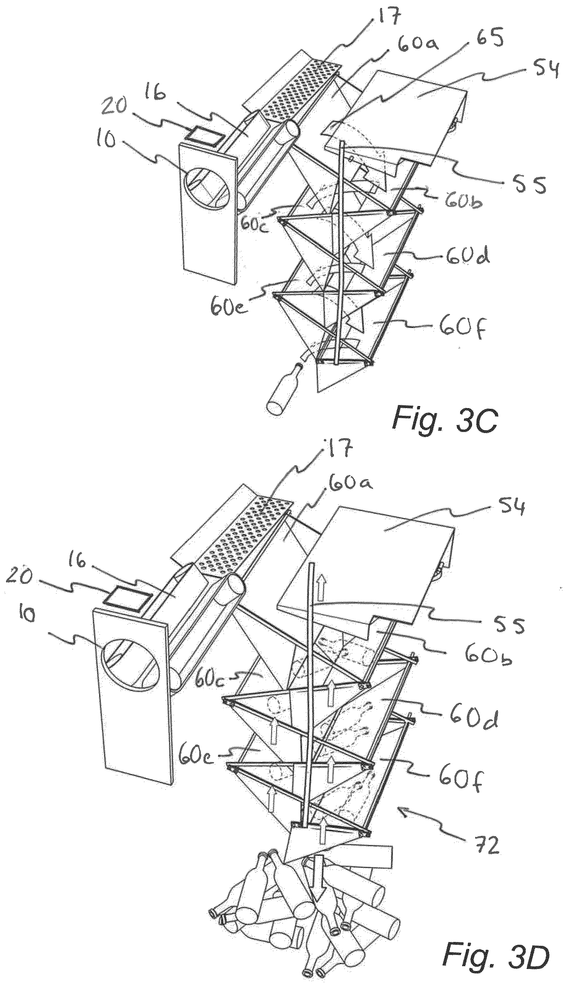

Figures 3A to 3E schematically show the working principle of an RVM according to the present inventive concept. For simplicity, only the inlet, the transportation means, the container arrangement and one or a plurality of containers are shown in Figures 3A to 3E to facilitate the understanding of the working principle of the invention. In this Figures the container arrangement is arranged in the expanded state which is here equal to the first receiving state. However when a shorter cabinet is used, at least the lowest slide might be slightly collapsed against the floor of the removable storage if so that state may correspond to first receiving state. Figure 3A illustrates a container that is inserted through the inlet in the direction of the arrow. A verification unit may e.g. be arranged at the inlet and inside the RVM, and when a container is to be returned to the user the direction of the movable belt may be reversed so the container is fed in a direction opposite to the direction of the arrow and picked up by the user. Additionally or alternatively, a diverter may be arranged at the movable belt and downstream of the verification arrangement, and being configured to divert invalid containers that are to be returned to the user. The invalid containers may e.g. be diverted from the active transporter or the movable belt by being pushed off the belt e.g. to the right and into a return device from which the user may collect the invalid containers. Containers that are to be accepted by the RVM is transported by the movable belt to the static slide 17. The movable belt and/or the static slide 17 is configured in driving speed, orientation, size and/or shape such that the used container many times falls off the static slide and into the container arrangement through the collapsible guide inlet, as indicated by the arrow in Figure 3B. As indicated by the arrows of Figure 3C, the used container is first passed from the first slide 60a to the next slide 60b arranged directly downstream thereof, and from this slide 60b to the next slide 60c arranged directly downstream thereof, and from this slide 60c to the next slide 60d arranged directly downstream thereof, and from this slide 60d to the next slide 60e arranged directly downstream thereof, and from this slide 60d to the next slide 60e arranged directly downstream thereof. Many times the container slides along the sliding surface of the first slide 60a and falls from this slide onto the sliding surface of the next slide 60b. Thereafter it might slide or more or less bump from this sliding surface onto the sliding surface of the next slide 60c until it has reached the bottom most slide 60f, wherefrom is exits at least if the bottom most slide is in the expanded state and unblocked.

As seen in the example illustrated in Figure 3C, the path formed by the containers while being transported in said set of slides substantially describes ZIGZAG pattern in two dimensions.

As seen in the example illustrated in Figure 3C, the collapsible container guide is configured to transport the container sideways or in a direction substantially transvers to the longest axis of the used container. The used containers in this example is bottle shaped and transported in a sideways direction where the container is rolling on its side. The bottom of the container is circular and the container transported with the bottom surface facing sideways.

Optionally, the inlet or the front of the RVM indicates to the user at which rate the containers may be inserted, and when the user feeds more and more container into the RVM they are passed one by one downwards in the container arrangement, e.g. along as indicated by the hatched containers shown in Figure 3D, and are collected in a pile insider the storage. Many times, the storage is periodically emptied either at regular intervals and/or when a predetermined fill level of the storage has been exceeded. When the storage is empty and a new user session is to be initiated the container arrangement is arranged in the first receiving position, in the first receiving position the end of the lower most slide is many times arranged on or at or in contact with the storage floor. The bottles that has passed the container arrangement many times pile up around and immediately outside the lower most outlet of the collapsable container guide, and may even come to rest inside the lower most slide. If the RVM continues to accept containers, these may also pile up inside the slides arranged upstream of the lower most slide.

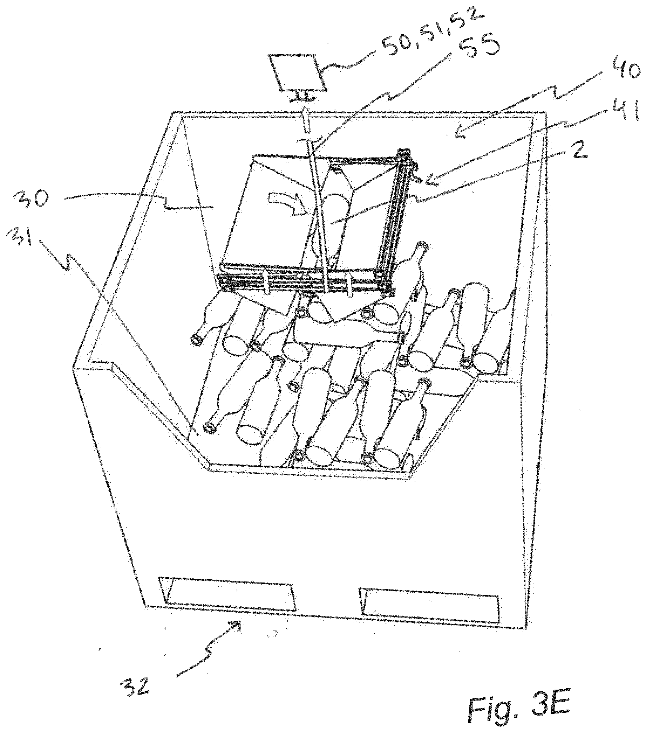

After each user session, and/or after a predetermined number of received container and/or in response to a fill level sensor reading and/or when a predetermined time has passed, the container arrangements is fully or partially collapsed by means of the raising mechanism which pulls the string 55 upwards and lifts i.a. the lower most slide upwards as indicated in Figure 3D. Here the string is a band shaped element, but may also be a chain. The lifting is performed sufficiently slowly to allow the containers within the container arrangement to exit the lower most slide, and as the containers exists from the lower most slide the containers remaining within the container arrangement proceeds to the next slide and finally out of the lower most slide. Provided the lifting is performed sufficiently slowly and/or with pauses all containers may exit without breaking. The raising by the raising mechanism may transform the collapsible container guide from the first receiving state into a fully collapsed state as seen in Figure 3E. As also seen in Figure 3E there containers pile up and now forms a new bottom layer at a higher vertical level than the removable storage floor. When more bottles are to be received, the collapsible guide of the container arrangement is lowered, by the lowering mechanism, and thereby transformed into a receiving state where the container arrangement is partially collapsed and where the end of the lower most slide is optionally arranged on or at or in contact with the top surface of the container pile. Thereafter, or just before, more bottles are fed into the RVM as described in relation to Figure 3A, transported into the first slide as described in relation to Figure 3B and pass the expanded slides as described in relation to Figure 3C. As the container guide is in a partially collapsed state the containers are more likely to remain within the container guide, but may be released upon lifting the collapsible guide by means of the lifting mechanism as described in relation to Figure 3D. This normally creates a new top surface formed by the pile of containers. Thereafter, the lowering mechanism may arrange the collapsible container guide in a receiving position where the end of the lower most slide is optionally arranged on or at or in contact with this new top surface and the container transportation process is repeated.

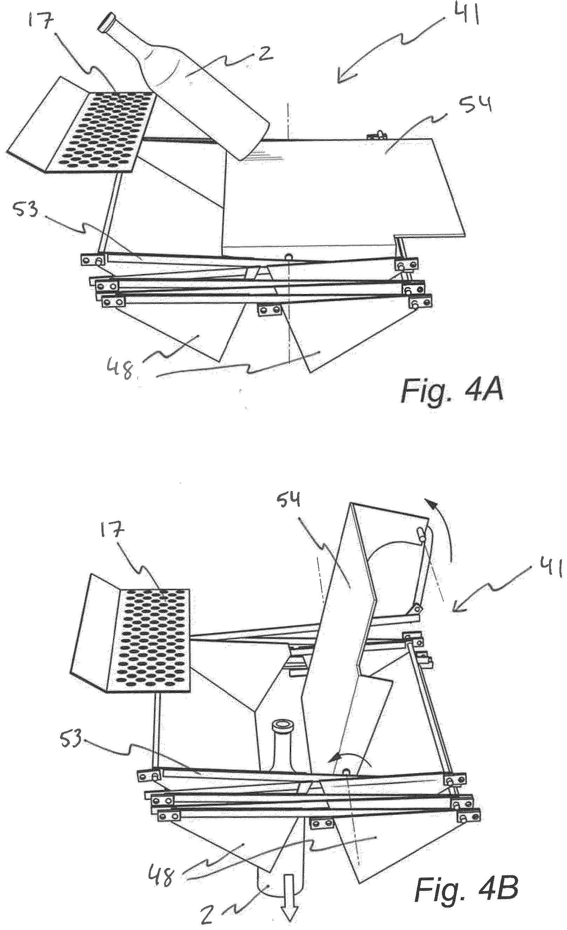

Figures 4A and 4B schematically show the working principle of an optional releasing mechanism according to the present inventive concept. Optionally, a cover plate 54 is arranged at the top of the collapsable guide such that it covers a portion of the opening of the collapsible guide and is preferably configured to mainly allow containers to enter the collapsible guide arrangement at the part of the opening where the first or top most slide is arranged, and preferably prevents containers from entering the collapsible guide arrangement at other part of the collapsible guide opening. However, it might occur that containers get stuck e.g. before, or some way into the opening of the collapsible container guide. If that happens, the cover plate 54 plate may be retracted and/or pivoted downwards by an angle e.g. within the range of 30° to 150° or within the range of 50° to 120°, as illustrated in Figure 4B, such that the container is released and falls or slides into the first slide. In the embodiment shown in Figure 4A, the container falls straight from into the storage after the cover plate has been pivoted. Additionally or alternatively, the first and or the second top most slides of the collapsible container guide may be arranged in their respective expanded state and configured to receive the container after the cover plate has been retracted or pivoted.

In e.g. Figures 2A, 2A'and 2B the collapsible container guide is arranged in the expanded state. In Figure 3D and Figure 3E the collapsible container guide is arranged in two different collapsed states of said set of collapsed states. In Figure 3D the collapsible container guide is arranged in a partially collapsed states which is, due to the pile of bottles on the floor of the storage, more collapsed than a first receiving state shown in Figure 3C. In e.g. Figures 3E, 4A and 4B the collapsible container guide is arranged in the fully collapsed state, which allows a container to be transported along the first one or two slides and thereafter out of the collapsible container guide through the outlet of said first or second slide, which outlet leads directly into the storage. The fully collapsed state may e.g. be used, when the fill level of the storage is almost reached, to enter the last number of container to fill up the storage.

As shown in the Figures, the container arrangement may comprise a frame for holding and/or supporting the collapsible container guide. As seen in e.g. in Figures 2A, 2A', 2B, 4A, 5d the frame 53 may be configured in size and shape for spanning or providing or arranging at least the inlet of said collapsible container guide in an open or expanded state. Additionally or alternatively, the frame may be configured in size and shape to provide or arrange the material of said collapsible container guide or the sliding surface of said collapsible container guide in a tensioned state or in a partially tensioned state, which tensioned state or partially tensioned state is preferably provided at all times while the container arrangement is mounted on said frame.

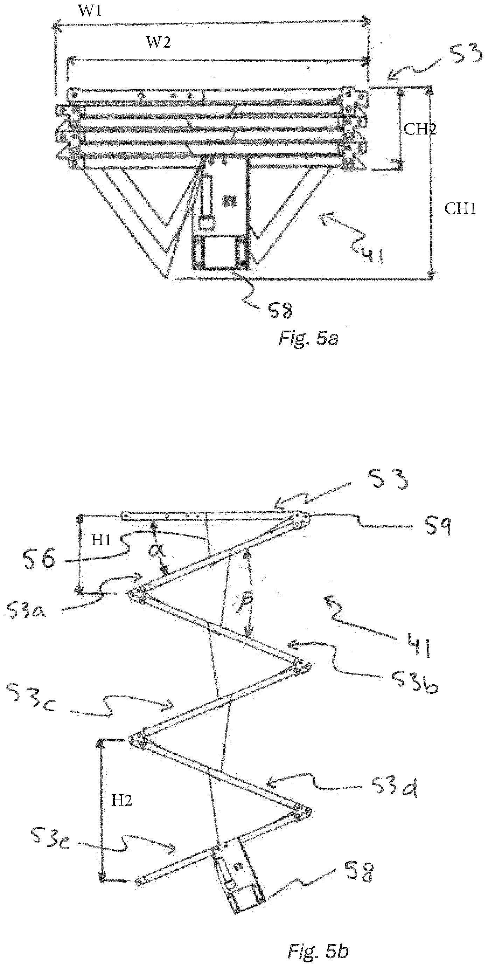

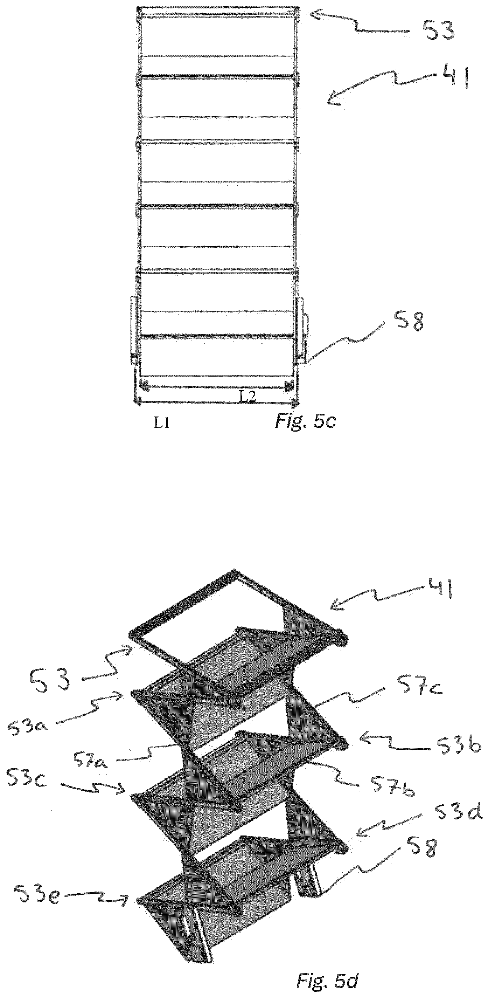

As seen if Figure 4b and 5d the frame may comprise a set of rigid sub units 53a-e, each rigid sub unit comprising at least three bars or elongated members 57a-c arranged in a U-shape. As seen in Figure 5d the base of the U may be flat. The rigid sub units 53a-e in said set of rigid sub units 53 are preferably pivotable attached to each other by pivoting means 59. The pivoting means allows the frame to be transformed between a plurality of collapsed states, and also allows the frame to be collapsed or folded into a collapsed state as shown in Figure 5a.

As seen e.g. in Figure 5b and 5d the frame may a set of rigid sub units 57a-b, each sub unit comprising at least three elongated members 53a-c configured to support the opening of the slide, which elongated members e.g. is arranged in a U-shape, wherein each rigid sub unit has an upper portion and a lower portion, wherein the sub units in the set of rigid sub units is foldable or collapsable attached to each other in series by an upper part of a first sub unit 53b being pivotably attached to the lower part of a second sub unit 54a arranged directly upstream of said first subunit at a pivot point. By the foldable or collapsable attachment to each other, the frame may be transformed between a collapsed and an expanded state.

The frame may further comprise stopping members 56, configured to prevent a pair of rigid sub units to pivot or unfold beyond a predetermined relative angle indicated by alfa and beta in Figure 5b.

The raising mechanism is e.g. a pulling mechanism that pulls at least one sliding surface and at least one of said rigid sub units upwards, while collapsing said sliding surface and said frame.

The lowering mechanism is e.g. a releasing mechanism that allows at least one of the rigid sub frames and the corresponding sliding surface of a collapsed slide to move downwards, while unfolding the at least one rigid sub frame and expanding said at least one sliding surface of a collapsed slide.

As seen in Figures 5a and 5b the frame is optionally provided with a sensor arrangement configured to detect the presence of any containers in, in front of and/or adjacent to outlet of the lower most slide. Generally, the first bottles many times come to rest some distance away from the outlet of the collapsible container guide. However, after a while the prior bottles start piling up outside the outlet of the collapsible container guide. When this situation is detected by the sensor arrangement, it is configured to sending a lifting signal to a processing device, whereupon the processing device provides the lifting mechanism with a activation signal to start raising the collapsible container. Additionally or alternatively, the sensor arrangement is configured to detect the presence of a pile of bottles in the storage while the collapsible container guide is lowered e.g. from the fully collapsed condition and upon detection of such a pile of bottles or upon detection that the bottom of collapsible container is at a suitable distance from or in contact with such a pile of bottle sending a stop lowering signal or the like to a processing device, whereupon the processing device provides the lowering mechanism with a deactivation signal to stop lowering the collapsible container.

According to an alternative embodiment the collapsible container is self supportive so the need for a frame is eliminated or at least the opening of the slide pockets are self supportive whereby the frame may have a more simple construction or be superfluous.

Figure 5a shows a side view of the frame in a fully collapsed state, wherein according to this particular embodiment the width W1 and W2 of the frame and therefore also the collapsible container guide is within the range of 450 to 500 mm, and the collapsable height CH1 of the frame is within the range of 100 to 150 mm, and the collapsable height CH2 of the frame including the optional slide supports is 290 mm.

Figure 5b shows the same frame as shown in Figure 5a, but in an expanded sate and the first receiving position, wherein according to this particular embodiment the vertical distance H2 between the lower portion of the bottom rigid sub frame portion 53e and top portion of the rigid sub frame portion 53d arranged directly upstream of said bottom rigid sub frame portion 53e is within the range of 300 and 375 mm. Also, the vertical distance H1 between an horizontal top elongated member of said frame and the bottom portion of the first rigid sub frame portion 53a arranged directly downstream of said horizontal top elongated member is within the range of 150 to 200 mm, and wherein the top portion of the first rigid sub frame portion 53a is pivotably arranged to said horizontal top elongated member at a pivot point 59. The angle alfa illustrated in Figure 5b in within the range of 15° to 30° and the angle beta illustrated in Figure 5b in within the range of 40° to 50° or within the range of 42° to 47°.

Figure 5c shows a front view of the same frame as shown in Figure 5b and in the same state. According to this particular embodiment the width L2 of the collapsible container guide is within the rage of 400 to 450 mm.

The invention is based on a insight by the inventors that the chute with in the RVM should both provide a proper alignment of the containers when they are transported e.g. sideway so they may exit the chute successfully, and also slow down the container sufficiently so they do not break within or upon exit of the chute, while not slow them down too much as they will then come to rest within the chute. The inventors know, based on experience, that predicting a maximum safe height form which an empty wine bottle may be dropped without breaking is really difficult and close to impossible. The height depends e.g. on the material composition of the bottle and any imperfections therein, on the surface material onto which the container is dropped, and not least on the angle at the container or bottle is dropped, a tiny variation in the dropping angle may seem to lead to a totally different breakage result.

An inclination angle beta/2 of the slide within the range of 10° to 30° or within the range of 15° to 25° or within the range of 20° to 25° generally provides a suitable speed of the container. Additionally or alternatively, a semi rigid material as the PVC material exemplified herein, generally provides a suitable damping of the container when falling into the next container. More rigid materials, like foam, might sometimes, dependent on its configuration, not provide a sufficient damping and thereby lead to the container jumping or travelling too quickly and loosing its alignment. The alignment might also be lost if the slide L1 is too narrow, as the container or bottle more easily get stuck, e.g. if it rotates slightly around a vertical axis passing through the container/bottle. Additionally or alternatively, to prevent a bottle from breaking it is preferred that the lowest end of the bottom slide is arranged within an interval of 0 - 10 cm from the floor surface, or that the lowest end of the bottom slide is arranged within an interval of 0 - 5 cm from the floor surface, that the lowest end of the bottom slide is arranged within an interval of 0 - 3 cm from the floor surface, or that the lowest end of the bottom slide is arranged within an interval of 1 - 3 cm from the floor surface, or that the lowest end of the bottom slide is arranged within an interval of 1.5 - 2.8 cm from the floor surface

It is important to note that the measures given above is adapted to one or a predetermined set of RVMs, for other RVMs the measures may be configured to suit the particular RVM at hand.

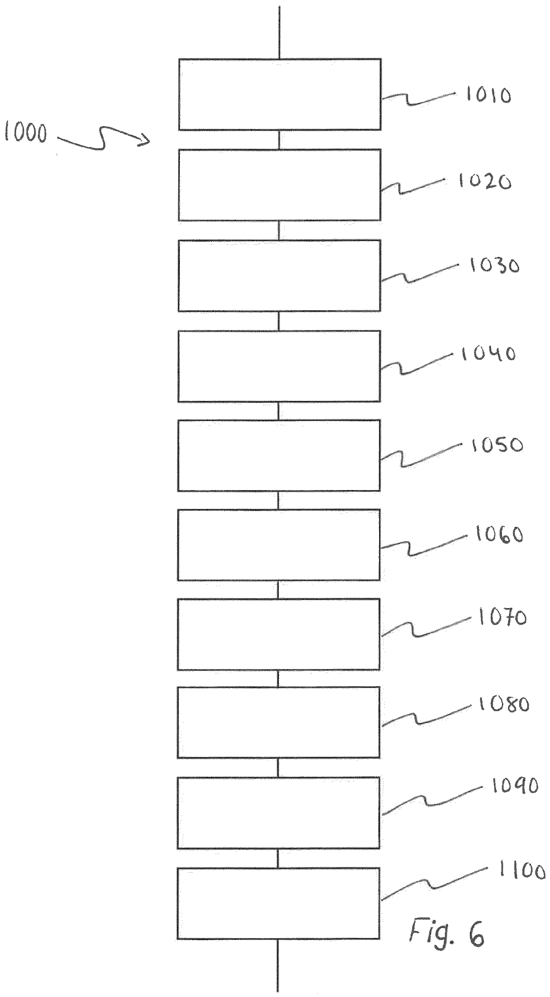

Figure 6 schematically shows a method 1000 of operating an RVM 1 according to the present inventive concept, the method comprising
- providing 1010, by said container guide operating arrangement 50, said collapsible container guide 41 in the first receiving state,
- receiving1020, by said transportation arrangement 15, a first plurality of valid used containers 2 via said user inlet 10,
- verifying 1030, by a verification arrangement, said first plurality of valid used containers 2 and classifying each container of said first plurality of used valid containers 2 as valid or potentially valid,
- transporting 1040 by said transportation arrangement 15 said first plurality of valid used containers 2 sequentially or one by one towards and into said collapsible guide inlet 42, whereafter the containers 2 in said first plurality of valid used container is transported sequentially or one by one passed a predetermined pair of slides under the act of gravity while said collapsible container guide 41 is in the first receiving state,
- transforming 1050, by said raising mechanism 51, the collapsible container guide 41 into one of said collapsed states, e.g the fully collapsed state, wherein each container 2 in said set of plurality of valid containers exits said collapsible container guide through said guide outlet 43 or a slide outlet sometime during the time interval while said collapsible container guide 41 is in the first receiving position or is raised towards said one of said collapsible states,
- transforming 1060, by said lowering mechanism 52 said collapsible container guide 41 into a receiving state of said collapsed states, wherein said guide outlet 43 is arranged inside said storage 30 and at or in the vicinity of the surface formed by at least said first plurality of used valid containers 2,
- receiving 1070, by said transportation arrangement 15, a further plurality of valid used containers 2 via said user inlet 10,
- verifying 1080, by a verification arrangement, said further plurality of valid used containers 2 and classifying each container of said further plurality of used valid containers 2 as valid or potentially valid,
- transporting 1090; 1040 by said transportation arrangement 15 said further plurality of valid used containers 2 sequentially towards and into said collapsible guide inlet 42, whereafter the containers 2 in said further plurality of valid used containers 2 is transported sequentially passed a predetermined pair of slides under the act of gravity while said collapsible container guide 41 is in the receiving state of said collapsed states,
- transforming 1100; 1050 by said raising mechanism 51, the collapsible container guide 41 into a higher one of said collapsed states, wherein each container in said set of further valid containers 2 exits through said guide outlet 43 during the time interval while said collapsible container guide 41 is in the receiving state of said collapsed states or is raised towards said higher one of said collapsible states.

The above method is also described in relation to e.g. Figures 3A - 3E.

Those with skill in the art will also understand that additional components that are not illustrated herein may be part of a reverse vending machine or a collection return system. Such components may, for example, include a power supply, a communication interface for communication with remote computers or processing devices, databases etc.

The inventive concept has mainly been described above with reference to a few embodiments. However, as is readily appreciated by a person skilled in the art, other embodiments than the ones disclosed above are equally possible within the scope of the inventive concept, as indicated herein.

## Claims

1. A Reverse Vending Machine, RVM, (1) arranged to receive used containers (2) made of fragile material such as glass from a user, comprising:
- a user inlet (10) for receiving used containers (2) made of a fragile material such as glass from a user,
- a verification arrangement (20) for authenticating the received containers (2),
- a storage (30) comprising a storage surface (31) for storing the authenticated containers (2),
- a container arrangement (40) comprising
- a collapsible container guide (41) for guiding the used containers (2) to said storage (30), which collapsible container guide (41) comprises a guide inlet (42) and a guide outlet (43),
- a container guide operating arrangement (50) configured to transform said collapsible container guide (41) between a set of states (70) comprising a first receiving state (71) and a set of collapsed states (72), wherein each state in said set of states are different from each other,
wherein said guide outlet (43) is arranged inside said storage (30) and at or in the vicinity of the storage surface (31) at least when said collapsible container guide (41) is in the first receiving state,
- a transportation arrangement (15) configured to transport said containers (2) received via said user inlet (10) to said collapsible guide inlet (42), at least when said collapsible container guide (41) is in said first receiving position,
wherein said collapsible container guide (41) further comprises:
- a set of slides (60) arranged in series, each slide having a slide inlet (62) and a slide outlet (63) and a sliding surface (61) configured in size and shape to receive said used container via said slide inlet (62) and guide said used container along a transportation direction (65) to said slide outlet (63) at least when said slide is unblocked and in an expanded state,
wherein said set of slides (61) comprises pairs of slides (66) wherein one of said slides in each pair of slides is arranged directly upstream of the other slide in said pair of slides and the transportation direction (65) of the upstream arranged slide is partially reverse to the transportation direction (65) of the other slide in said pair of slides at least when said each slide in said pair of slides is in the expanded state,
wherein said container guide operating arrangement (50) comprises:
- a raising mechanism (51) configured to collapse the collapsible container guide (41) by moving a plurality of the sliding surface (64) upwards towards the top of the guide optionally starting with the bottom sliding surface (64),
- a lowering mechanism (52) configured expand the collapsible container guide from any of the collapsed states into the first receiving state by moving at least one of the sliding surfaces (64) downwards into its expanded state.

2. The RVM according to claim 1, wherein said raising mechanism is configured to move, the sliding surface of least one of said slides upwards by providing a lifting force acting on said at least one sliding surface.

3. The RVM according to anyone of the preceding claims, wherein said lowering mechanism (52) is configured to move, when at least one of said slides is in a collapsed state, the sliding surface (64) of said at least one of said slides downwards by removing, decreasing and/or lowering a lifting force acting on said at least one sliding surface.

4. The RVM according to any one of the preceding claims, wherein the slides of the collapsible container guide is configured to allow containers within the bottom most slides to fall out of the collapsible container guide while the guide is being raised towards a fully collapsed state.

5. The RVM according to any one of the preceding claims, further comprising a cover plate being arranged above the collapsible container guide and arranged to partially cover the opening of the collapsible container guide, wherein the cover plate is further configured to being retractable or pivotable downwards, so at to cause a container that is prevented from entering the collapsible container guide to fall into the same.

6. The RVM according to anyone of the preceding claims, wherein said container guide operating arrangement (50) operates directly on at least one of the lowest sliding surface (64) and optionally directly on at least the bottom sliding surface (64) and/or wherein said container guide operating arrangement (50) is configured to collapse the container guide by successively moving the sliding surfaces (64) upwards towards the top of the container guide starting with at least one of the lower or the bottom sliding surface (64).

7. The RVM according to any one of the preceding claims, wherein said used containers (2) are transported from said slide inlet (62) to, and optionally through, said slide outlet (63) by means of gravity.

8. The RVM according to any one of the preceding claims, wherein the container path provided by said set of slides (61) substantially describes a ZIGZAG and/or serpentine pattern in two or three dimensions.

9. The RVM according to any one of the preceding claims, wherein the used container is transported in a direction substantially transvers to the longest axis of the used container, or
wherein the used container is substantially cylindrical or bottle shaped and transported in a sideways direction e.g. the container preferably rolling on its side.

10. The RVM according to any one of the preceding claims, further comprising a sensor arrangement (58) configured to determine the free storage height inside said storage (30) and/or to determine the presence of any objects such as containers in front of or adjacent to the bottom most slide.

11. The RVM according to anyone of the preceding claims, wherein said container arrangement further comprises a frame (53) for holding said collapsible container guide (41) and/or for spanning at least the inlet of said collapsible container guide (41) in an expanded state, wherein the material of said collapsible container guide is optionally in a tensioned state.

12. The RVM according to claim 11, wherein the frame comprises a set of rigid sub units (53a-e), each rigid sub unit comprising at least three bars (57a-c) arranged in a U-shape and wherein the rigid sub units in said set of rigid is attached to each other by at least one pivotable point (59), whereby said frame preferably is collapsable or foldable in a collapsed state.

13. The RVM according to any one of claims 11-12, wherein the frame comprises a set of rigid sub units, each sub unit comprising at least three bars (57a-c) arranged in a U-shape having an upper portion and a lower portion, wherein the sub units in the set of rigid sub units is foldable or collapsable attached to each other in series by an upper part of a first sub unit being pivotably attached to the lower part of a sub unit arranged directly upstream of said first subunit.

14. The RVM according to anyone of the preceding claims, wherein the collapsible container guide (41) and the set of slides is made of flexible material such as fabric and/or textile selected from a group comprising plastics, fibrous materials, synthetic materials, organic materials, polymer materials, leather and rubber and combinations thereof.

15. The RVM according to anyone of the preceding claims, wherein said raising mechanism (51) is a pulling mechanism that pulls the at least one sliding surface (64) and at least one of said rigid sub frames upwards, while collapsing said sliding surface (64) and said frame.

16. The RVM according to anyone of the preceding claims, wherein the lowering mechanism (52) is a releasing mechanism that allows at least one sub frame and at least one sliding surface (64) of a collapsed slide to move downward, while expanding said at least one sliding surface of a collapsed slide.

17. The RVM according to anyone of the preceding claims, wherein said verification arrangement is arranged upstream of said collapsible container guide (41) and downstream of said user inlet (10), and wherein said transportation arrangement (15) transports said used containers (2) from said user inlet (10) to said guide inlet (42) via said verification arrangement.

18. The RVM according to anyone of the preceding claims, wherein said storage is a removable container preferably placed within a housing of the RVM, wherein said removable container optionally comprises movement facilitating means (32) such as wheels and/or wherein said movement facilitating means is optionally configured in size and shape to be removed by moving means such as a pallet jack.

19. A method (1000) of operating an RVM according to any one of the claims 1 to 16, comprising
- providing (1010), by said container guide operating arrangement (50), said collapsible container guide (41) in the first receiving state,
- receiving (1020), by said transportation arrangement (15), a first plurality of valid used containers (2) via said user inlet (10),
- verifying (1030), by a verification arrangement, said first plurality of valid used containers (2) and classifying each container of said first plurality of used valid containers (2) as valid or potentially valid,
- transporting (1040) by said transportation arrangement (15) said first plurality of valid used containers (2) sequentially towards and into said collapsible guide inlet (42), whereafter the containers (2) in said first plurality of valid used container is transported sequentially passed a predetermined pair of slides under the act of gravity while said collapsible container guide (41) is in the first receiving state,
- transforming (1050), by said raising mechanism (51), the collapsible container guide (41) into one of said collapsed states,
wherein each container in said set of plurality of valid containers (2) exits said collapsible guide through one of said slide outlets (43) during the time interval while said collapsible container guide (41) is in the first receiving position or is raised towards said one of said collapsible states,
- transforming(1060), by said lowering mechanism (52), said collapsible container guide (41) into a receiving state of said collapsed states, wherein said guide outlet (43) is arranged inside said storage (30) and at or in the vicinity of the surface formed by at least said first plurality of used valid containers (2),
- receiving (1070), by said transportation arrangement (15), a further plurality of valid used containers (2) via said user inlet (10),
- verifying(1080), by a verification arrangement, said further plurality of valid used containers (2) and classifying each container of said further plurality of used valid containers (2) as valid or potentially valid,
- transporting (1090) by said transportation arrangement (15) said further plurality of valid used containers (2) sequentially towards and into said collapsible guide inlet (42), whereafter the containers (2) in said further plurality of valid used containers (2) is transported sequentially passed a predetermined pair of slides under the act of gravity while said collapsible container guide (41) is in the receiving state of said collapsed states,
- transforming (1100), by said raising mechanism (51), the collapsible container guide (41) into a higher one of said collapsed states,
wherein each container in said set of further valid containers (2) exits through said guide outlet (43) during the time interval while said collapsible container guide (41) is in the receiving state of said collapsed states or is raised towards said higher one of said collapsible states.

20. The method according to claim 19 for receiving a first set of containers (2) comprising said first plurality of used containers (2) and additional used containers (2) which additional containers (2) are invalid [asl foreign objects].

21. The method according to any one of claims 19-20, wherein said RVM is configured to receive a predetermined set of used containers (2) according to a maximum capacity indicated by a closable lid.
